Europäisches Patentamt

European Patent Office

Office européen des brevets

(11) Publication number: **0 354 748**
**A1**

# (12) EUROPEAN PATENT APPLICATION

(21) Application number: **89308013.5**

(22) Date of filing: **07.08.89**

(51) Int. Cl.⁵: **A 01 G 31/00**

(30) Priority: **12.08.88 GB 8819205**

(43) Date of publication of application:
**14.02.90 Bulletin 90/07**

(84) Designated Contracting States:
**BE DE ES FR GB GR IT LU NL SE**

(71) Applicant: **PILKINGTON INSULATION LIMITED**
**Prescot Road**
**St Helens Merseyside WA10 3TT (GB)**

(72) Inventor: **Cockram,David, Ralph**
**9 Dale Close, Parbold**
**Wigan, Lancashire, WN8 7DL (GB)**

**Pratley, Bernard, Keith**
**3Bryn Aber, Wedgewood Heights**
**Holywell, Clwyd, North Wale, CH8 7NZ (GB)**

(74) Representative: **Blatchford, William Michael et al**
**Withers & Rogers 4 Dyer's Buildings Holborn**
**London EC1N 2JT (GB)**

(54) Rock wool growing medium.

(57) A rock wool growing medium incoporates a surfactant and a sparingly soluble inorganic material, which gradually dissolves in nutrient solution to provide benefit to the plant. The inorganic material may for example provide silica to enhance plant growth or silver which is a fungicide. The incorporation of the inorganic material in the medium avoids the problem of precipitation in supply systems associated with attempts to dissolve such material in a conventional nutrient supply. The inorganic material may be incorporated by spraying or sprinkling onto a primary mat of rock wool 19 through the surfactant spray 24 or by a conveyor 25. Substantially uniform distribution of the inorganic material then occurs during formation of the multi-layer mat 23 and subsequent compression, crimping and air curing.

EP 0 354 748 A1

**Description**

# ROCK WOOL GROWING MEDIUM

This invention relates to a rock wool growing medium of the type which incorporates a surfactant. The invention also relates to processes for manufacturing such a growing medium.

For many years the soilless culture of plants has been practised in a growth medium which consists of fibres of basalt rock bonded together by a phenolic resin and commonly known as rock wool. The basic process for manufacturing rock wool was developed for production of insulation. Such a process is described in UK patent 736 358. The basic process described in this patent comprises dropping a stream of molten rock onto a rotating wheel thereby causing the rock to form into long fibres which become entrained in a current of air and are collected. One method for collection is to use a moving perforated conveyor belt through which the air is drawn. This causes a mat of fibres to build up on the conveyor belt. A binder, such as phenolic resin, is sprayed onto the fibres as they travel in the current of air and the mat can be made to have dimensional stability by curing the binder in an air oven once it has been removed from the perforated conveyor.

In order for a rock wool mat to be usable as a growing medium it was necessary to incorporate a surfactant into the mat. One process for such incorporation is described in UK patent 1 336 436. Here the surfactant is sprayed onto the fibres at the same time as the binder and before the fibres form into a mat on the perforated conveyor. It is said that use of this method is necessary in order to achieve a good distribution of surfactant in the final mat. European patent 0 099 801 suggests that the method described in UK patent 1 336 436 has two problems. First there is some degree of carry over of surfactant in the current of air and second if one attempts to introduce further material, such as solid particles, by such a method, then the particles may become encapsulated by the binder and be useless. These problems are overcome by modifying a known process variant. When producing fibre mats for insulation or growing medium purposes it is necessary to trim the edges of the mat after they have passed through the curing oven. This edge trim is then chopped up and returned in a current of gas to the forming area. EP 0 099 801 suggests that the surfactant can be sprayed onto the return edge trim, which is then injected into the mat on the conveyor and forms a good mixture with that mat because of the gas current carrying the return edge trim. It is also possible to incorporate solids in the return edge trim by a similar method.

Both of the above methods of adding surfactant and other materials rely on obtaining a good distribution of the incorporated material by intimate mixing with the fibres. This is necessary because the mat formed on the forming conveyor is destined to be the final product. In WO 87/06631 there are described a variety of mat forming processes in which the mat formed on the forming conveyor is actually much thinner than the final product. By various processes the primary mat formed on the forming conveyor is folded or multi-layered in order to give the final product. This allows use of a third technique for incorporation of surfactant or solid matter. Namely the spraying or addition of such incorporated materials at the stage where the primary mat has already been formed, but before it is folded or multi-layered.

US patent 2 192 939 describes the use of various soil conditioners in glass wool, one possibility that is suggested is the use of appropriate glass compositions to dissolve and thereby enrich the soil. Plants are not grown in this mat, it is simply an overlay to feed the soil in which plants will be later grown. US patent 3 373 009 describes the addition of various plant nutrients to a foam material to be used in plant pots. Soluble salts of the various nutrients required by a growing plant are incorporated in the foam. This technology is not for large scale application and in particular is not for use with hydroponic fluid feed systems, such as those commonly used with rock wool growing media.

Rock wool growing media, in the form of slabs or cubes are used extensively for growing cucumbers, melons and tomatoes. Hydroponic fluid is fed in a drip fashion to the top surface of these growing media and is available to the plant roots as it percolates through. The nutrients required by the plant are dissolved in the hydroponic fluid and it is common practice to add permitted fungicides and biocides to the fluid in order to suppress or eliminate plant disease. A problem occurs when it is desired to incorporate sparingly soluble materials into the feed solution. Such materials tend to precipitate out in the feed supply pipes and clog up the supply system and pumps. This is inconvenient and expensive to correct. Furthermore, the application of some materials to the growing medium by this technique results in a build up of concentration at the surface of the growing medium due to a filtration effect. Thus the roots at lower levels within the growing medium do not obtain the same benefit and the plant does not obtain the optimum treatment or nutrient supply.

It is an object of the present invention to provide a growing medium which overcomes these problems and to provide methods for the production of such growing media. According to the present invention a rock wool growing medium incorporating a surfactant also incorporates a substantially uniformly distributed sparingly soluble inorganic material which gradually dissolves in tap water or nutrient solution to provide benefit to a plant having roots in the growing medium. The advantages of incorporating the sparingly soluble inorganic material in the growing medium, rather than attempting to dissolve it in the nutrient supply, are that the inorganic material does not precipitate in the supply system and cause blockages or lowering of supply concentrations and the inorganic material is uniformly available throughout the growing medium, rather than being predominently available at the surface of the growing medium due to filtration of precipitated crystals by the fibrous mat.

The inorganic material may provide a silica reservoir, or may dissolve to provide a silica solution which provides the advantage of supplying the required amount of silica nutrient to growing plants such as cucumbers. The high concentration of silica desirable in the feed solution for cucumbers is not attainable by dissolving silica in nutrient solution at its normal pH range of 5-7. Silica can, however, be provided in sufficient quantities by making it available directly in the vicinity of the plant root by arranging for it to be released from the growing medium. Tests have shown that silica is most effective at higher pH. Since nutrient solution pH above 6.5 leads to lack of availability of trace elements the preferred pH range for effective silica utilisation is 5.8-6.5.

The inorganic material which dissolves to provide a silicate solution may be fumed silica. The advantage of using fumed silica is that it is an amorphous material which can have a high surface area and therefore dissolve at a sufficient rate to provide nutrient to plants that require feed solution silica levels of up to 100 ppm, such as cucumbers.

An alternative inorganic material for provision of silica is a colloidal suspension of silica stabilised with alkali and/or ammonium counter ions. This has the advantage that it can be applied to the growing medium during the processing stage in the form of a spray, provided non-ionic water is used as the solvent. Relatively soluble silicates such as potassium, sodium and ammonium silicate can be sprayed in solution. Insoluble silicic acid is then deposited within the growing medium to provide the required silica reservoir. To ensure that this occurs it is preferable that the growing medium is wetted with acidic solution before it is used for plant growth. Calcium or magnesium silicates are not preferred because the availability of the silica can be affected by calcium or magnesium in the nutrient solution applied to the plant.

Another inorganic material which can be incorporated in the growing medium is silver. Silver ions have a fungicidal action such that even at a concentration of less than one part per million various fungal pathogens have their activity totally blocked. The problem is that the chloride ions present in the tap water used to make up hydroponic fluid inevitably lead to precipitation of silver chloride if silver ions are dissolved in the feed solution. Incorporation of silver in situ within the growing medium overcomes the problems of reaction with the chloride ions in the nutrient supply.

The silver may be contained in silver chloride crystals, which have a solubility rate appropriate to the supply of silver ions to the growing environment over the period of one growing season. Alternatively the silver may be contained within a soluble glass composition which may be a potassium phosphate glass containing silver oxide and calcium and magnesium oxides as dissolution rate control factors, or it could be a silicate glass. A sodium glass is not preferred.

The inorganic material may contain copper in addition to or instead of silver. Copper is a cheaper material than silver and therefore has the advantage that the cost of the fungicide may be reduced.

It will be appreciated that the growing medium according to the invention can incorporate any inorganic biocide which can slowly dissolve in nutrient solution such as that supplied to the growing medium when in use.

Also according to the present invention a rock wool growing medium production process comprises forming fibres from molten rock, spraying binder onto the fibres, collecting the fibres in a mat which attains a maximum thickness, incorporating surfactant into the mat before it attains maximum thickness and curing the thick mat after compressing and re-orienting the fibres as required, wherein a sparingly soluble inorganic material is also added to the mat before it attains maximum thickness to produce a growing medium incorporating such an inorganic material. The advantage of adding the inorganic material before the mat attains maximum thickness is that the material is thereby distributed substantially uniformly throughout the finished mat. The fiberised rock may be carried in a gas current onto a perforated conveyor and surfactant and binder sprayed into the fibres being carried by the gas current, in that case inorganic material can also be sprayed into the gas current to be incorporated into the mat as it is built up on the perforated conveyor.

Alternatively, where the process utilises return edge trim which is conveyed onto the perforated conveyor by means of a gas stream, the inorganic material can either be sprayed onto the return edge trim or incorporated as solid matter within the return edge trim flow and thereby incorporated into the mat as it builds up on the perforated conveyor. In such a process the surfactant can either be sprayed onto the edge trim along with the inorganic material, or the surfactant can be sprayed with the binder and therefore remain separate from the inorganic material until the return edge trim becomes integrated with the mat during the build up to final thickness. The advantage of incorporating the inorganic material in the return edge trim is that it does not interact with the binder to such a great extent and it does not become encapsulated with the binder.

For processes in which the primary mat built up on the perforated conveyor is subsequently built up into a multi-layered mat to form the mat of final thickness the inorganic material can be sprayed or distributed on the primary mat before such multi-layering. The surfactant can either be incorporated along with the inorganic material or at an earlier stage in the process. An advantage of distributing inorganic material onto the primary mat is that no material is lost in the gas extracted from the remote side of the perforated conveyor and it is possible to get a very uniform distribution of material across the primary mat, which cannot be guaranteed if the inorganic material is supplied along with the return edge trim.

Inorganic silica material may be supplied as powdered fumed silica mixed with the return edge trim or distributed over the primary mat. Silica may also be incorporated into the primary mat by spraying colloidal silica onto the fibres, into the return edge trim, or onto the primary mat. A suitable form of colloidal silica is one which is stabilised with ammonium hydroxide or sodium hydroxide. A typical colloidal concentration is 40%. Silica may also be sprayed as a solution of alkali metal silicates such as potassium or sodium silicate, or as a solution of ammonium silicate. Silver chloride can be incorporated into the primary mat by spraying a soluble complex of silver chloride in ammonia or amine onto the fibres, into the return edge trim, or onto the primary mat. The complexing agent is decomposed by the heat of the curing oven to leave silver chloride.

Alternatively silver chloride can be incorporated by use of a two spray system, one spray supplying silver nitrate solution and the other potassium chloride solution to avoid the problem of precipitation of silver chloride in the spray supply system. The heat of the curing oven causes precipitation of silver chloride substantially uniformly throughout the mat. It is also possible to use the presence of chloride ions in the nutrient solution to form silver chloride from a soluble silver compound (other than silver nitrate) that has been sprayed onto the mat.

The invention will now be described by way of example and with reference to the accompanying drawings of which:

Figure 1 is a diagrammatic cross section through a rock wool forming chamber;

Figure 2 is a diagrammatic view of a multi-layer rock wool production system; and

Figure 3 is a pictorial representation of a plant growing in a rock wool growing medium.

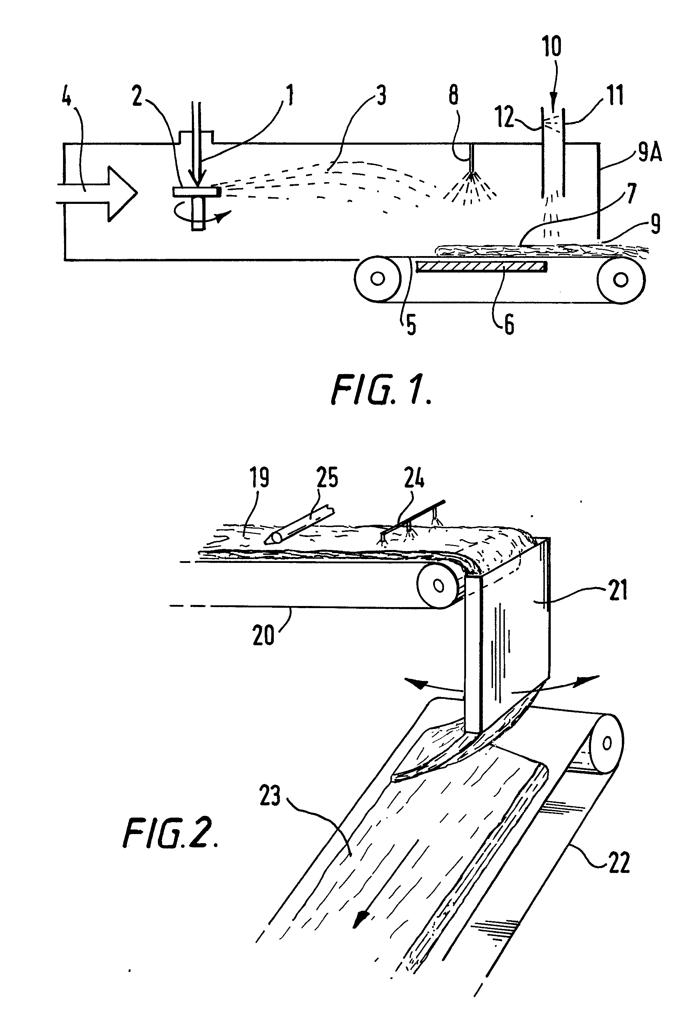

Figure 1 shows a stream of molten rock 1 falling onto a rotating wheel 2 to produce fibrous rock material 3 which is blown in a current of gas 4 onto a perforated conveyor belt 5. The stream of gas is extracted via an extraction system 6 beneath the perforated conveyor belt 5. This causes a fibrous mat 7 to build up on the conveyor belt 5. A spray system 8 coats the fibres 3 with a binder while they are being carried towards the conveyor 5 by current of air 4. For production of growing medium a surfactant may be sprayed through the same spray system 8 as the binder, or closely related sprays (not shown). The mat 7 is removed from the forming area through a gap 9 in the blowing hood 9A. Waste material, such as edge trim, from the processing of cured rock wool mat is returned in a current of gas 10 through duct 11. The force of the gas current disturbs the mat 7 on conveyor 5 and causes the return edge trim to be mixed with the mat 7 before extraction through the gap 9. Surfactant or other material can be introduced to the duct 11 via supply system 12, which can be a spray in the case of liquids. For solids a powder or particulate composition of the appropriate density is injected into duct 11 and becomes entrained in the gas stream 10 along with the return fibres. Solutions of inorganic matter can be sprayed through the spray system 8 or introduced as a spray into the duct 11 through the supply system 12, or introduced as solid matter through the supply system 12 into duct 11. It is not desirable to introduce solid matter in the path of the binder spray, because the binder will tend to encapsulate the solid matter and prevent subsequent release of the inorganic material in solution.

Figure 2 shows a primary mat 19 after emergence from the blowing hood 9 and passing along a conveyor belt 20. At the end of conveyor belt 20 the mat is caused to fall through a box shaped pendulum device 21 which can be arranged to swing backwards and forwards across a second conveyor 22 to lay down a multi-layer mat 23. The number of layers of primary mat which go to make up the multi-layer mat 23 is controlled by the speed of conveyor 22. Surfactant can be applied to the primary mat through spray system 24. Solid inorganic powder can be distributed over the primary mat through conveyor system 25 and solutions of inorganic material can be distributed over the primary mat through spray system 24 or through a second spray system (not shown).

In the case of processes where there is no multi-layering, the mat 8 as shown in Figure 1 is then compressed, crimped, cured in an air oven, cut up and packaged to form slabs of material to be used as plant growing medium. In the case where a pendulum device such as that shown in Figure 2 is employed, the final mat 23 is treated in the same way. It will be appreciated that any other variant of the process for manufacturing rock wool growing media could be modified so that inorganic slightly soluble material could be substantially uniformly incorporated within the mat.

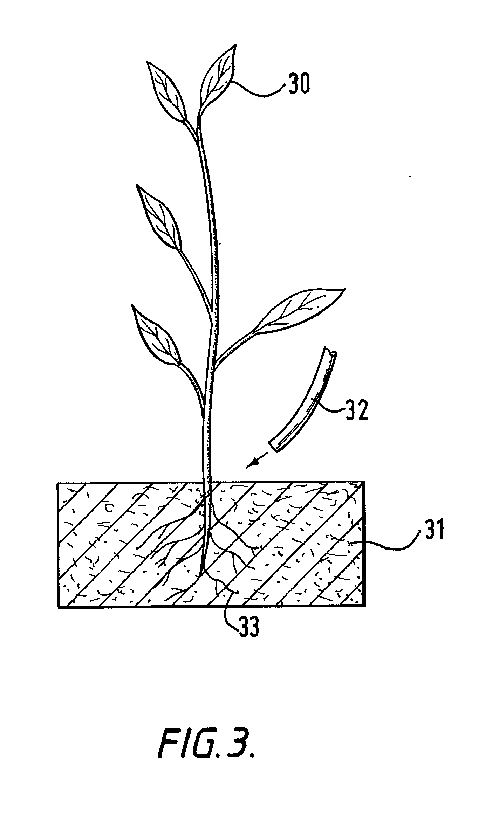

Figure 3 shows a plant 30 growing in a rock wool slab 31 which has been made in accordance with the process of this invention and contains silver chloride, silver glass frit or silica or other sparingly soluble inorganic materials which provide benefit to the plant 30. Supply of nutrient via feed pipe 32 makes the nutrient available to the plant roots 33 and causes the inorganic material to release slowly and be available in the vicinity of the plant roots. In the case of silver ions these suppress fungal activity which would otherwise stunt the growth of the plant or kill it and in the case of silicon this is absorbed into the plant and promotes resistance to attacks by powdery mildew and other fungal diseases in addition to enhancing fruit yield, especially in cucumbers.

Various growing trials have been conducted to test the efficacy of mineral wool growing media according to this invention and various production methods have been tested. The results are summarised in the following examples.

Example 1

Takahashi has shown that silica levels of 100 ppm in the nutrient solution fed to cucumbers is beneficial. The cucumber plant absorbs the silica during growth and although the difference between silica deficient plants and those fed the 100 ppm solution is only slight during the early growth phase, later on the deficient plants have increased susceptibility to infection by fungus diseases, decreased pollen fertility and lower fruit yields. Up to 100 ppm concentration the higher the silica level the greater the benefit.

As discussed earlier silica is only sparingly soluble at the normal pH range for nutrient solution. Takahashi resorted to use of silicic acid to obtain the required concentration which would be expensive to use on a commercial scale. We took tap water from the local mains supply and measured the level of dissolved silica, we then used ICI 'solufeed' nutrient to give a nutrient solution of pH 6.6; again the level of dissolved silica was measured. Finally 0.5 g Elkem fumed silica was added to 150 ml of the nutrient solution and the resulting dissolved silica level measured. The results are recorded in Table 1 from which it can be seen that the increase in dissolved silica level resulting from addition of fumed silica is only slight and falls well short of the target concentration of 100 ppm.

Table 1

| | soluble silica content ppm |
|---|---|
| Tap water | 6 |
| Nutrient solution | 6 |
| Nutrient solution and fumed silica | 16 |
| Tap water and fumed silica | 36 |

Example 2

A rock wool slab had 2% by weight Elkem fumed silica incorporated within it. This level was calculated to be capable of providing a silica level of 100 ppm in the nutrient solution supplied to a cucumber plant during its growth. Although it is not possible to achieve 100 ppm solution strengths the silica is thought to be available for absorption by the cucumber plant's roots due to its release in the vicinity of the root.

Comparative growing trials were conducted between a rock wool growing block to which fumed silica had been added and two blocks to which no silica had been added. One of the silica free comparison blocks was fed with nutrient solution made up with tap water and the other was fed with nutrient solution made up with distilled water and therefore having a lower silica level. The fumed silica block was fed nutrient made up with tap water. The results are given in table 2.

Table 2

| | 28 days plant height (cm) | Average Plant wt(g) | % $SiO_2$ in stem/leaf |
|---|---|---|---|
| Comparative block with nutrient in distilled water | 6.1 | 2.0 | 1.0 |
| Comparative block with nutrient in tap water | 14.4 | 6.1 | 1.1 |
| Block with fumed silica added | 16.2 | 6.8 | 2.2 |

It can be seen from table 2 that although the physical size of the cucumber plants grown in the block containing fumed silica was only slightly greater than the comparative examples, the percentage of silica in the plant was markedly higher than the comparative examples and would provide the benefits described by Takahashi later in the growth period.

Example 3

Rock wool growing cubes were impregnated with silver chloride and 9 tomato seedlings were planted in each of them. Nine seedlings were also planted in control cubes which did not contain any silver. When the seedlings were 25 mm tall the cubes were inoculated with Phytophthera cryptogea at varying concentrations and the plant survival rate after a further 16 days is recorded in table 3.

Table 3

| No. Zoospores added per plant | No. surviving plants at 16 days | |
|---|---|---|
| | AgCl treated | Control |
| 20 000 | 9 | 0 |
| 5 000 | 7 | 2 |
| 2 000 | 7 | 1 |
| 500 | 9 | 1 |

It can be seen that the addition of silver chloride to the rock wool enhanced the survival rate considerably. It will be appreciated that this experiment represents a massive fungal infection and in practice the protection afforded by rock wool incorporating silver ion releasing components should be adequate providing the concentration and release rate is appropriate to the rate and duration of nutrient supply.

## Claims

1. A rock wool growing medium incorporating a surfactant characterised in that the growing medium also incorporates a substantially uniformly distributed sparingly soluble inorganic material which gradually dissolves in tap water or nutrient solution to provide benefit to a plant having roots in the growing medium.

2. A growing medium as claimed in claim 1 in which the inorganic material provides a silica reservoir or dissolves to provide a silica solution.

3. A growing medium as claimed in claim 2 in which the inorganic material is fumed silica or colloidal silica.

4. A growing medium as claimed in claim 2 in which the inorganic material is silicic acid formed from ammonium or alkali metal silicates.

5. A growing medium as claimed in claim 1 in which the inorganic material includes silver or copper or a mixture of silver and copper.

6. A growing medium as claimed in claim 5 in which the inorganic material includes silver in the form of silver chloride.

7. A growing medium as claimed in claim 5 in which the inorganic material is a silver containing soluble glass frit.

8. A mineral wool growing medium incorporating a surfactant characterised in that it further includes an inorganic biocide which can slowly dissolve in the nutrient solution supplied to the growing medium in use.

9. A rock wool growing medium production process comprising forming fibres from molten rock (1), collecting the fibres in a mat (7) which attains a maximum thickness, spraying binder (8) onto the fibres, incorporating surfactant into the mat before it attains maximum thickness and curing the thick mat (23) after compressing and re-orienting it as required, characterised in that a sparingly soluble inorganic material is also added to the mat before it attains maximum thickness to produce the growing medium as claimed in any preceding claim.

10. A rock wool growing medium production process as claimed in claim 9 comprising conveying fibres formed from the molten rock (3) onto a perforated conveyor (5) by means of a gas current (4) and spraying a surfactant and binder into the gas current (8) to coat the fibres characterised in that an inorganic material is also sprayed (8), as a solution or a colloid, into the gas current to produce the growing medium.

11. A rock wool growing medium production process as claimed in claim 9 comprising conveying fibres formed from the molten rock (3) onto a perforated conveyor (5) by means of a first gas current (4), spraying a binder (8) into the first gas current, returning chopped edge trim into the downstream portion of the forming conveyor in a second gas current, spraying surfactant into the first gas current or the second gas current characterised in that the inorganic material is either sprayed (12) into the second gas current (10) or conveyed as solid matter within the second gas current to produce the growing medium.

12. A rock wool growing medium production process as claimed in claim 9 comprising conveying fibres formed from the molten rock (3) onto a perforated conveyor (5) by means of a first gas current (4), spraying a binder (8) into the first gas current, returning chopped edge trim into the downstream portion of the forming conveyor in a second gas current (10), spraying surfactant into the first gas current or the second gas current, transferring the primary mat (19) so formed via a pendulum device (21) to build up a multi-layered mat (19) characterised in that the inorganic material is sprayed (24) or distributed (25) onto the primary mat (19) before the pendulum device (21) to produce the growing medium.

13. A rock wool growing medium production process as claimed in claim 9 comprising conveying fibres formed from the molten rock (3) onto a perforated conveyor (5) by means of a gas current (4), spraying a binder (8) into the gas current, transferring the primary mat (19) so formed via a pendulum device (21) to build up a multi-layered mat (23) characterised in that the surfactant and the inorganic material is sprayed or distributed onto the primary mat (19) before the pendulum device (21).

14. A process as claimed in any one of claims 9 to 13 characterised in that the inorganic material is added to the mat as a spray of silver chloride in a complex with ammonia or an amine and dried in the curing oven.

15. A process as claimed in any one of claims 9 to 13 characterised in that the inorganic material is added to the mat by spraying through two separate spray systems, one supplying silver nitrate and the other supplying potassium chloride.

16. A process as claimed in any one of claims 9 to 13 characterised in that the inorganic material is added to the mat as a spray of a colloidal suspension of silica.

17. A process as claimed in any one of claims 9 to 13 characterised in that the inorganic material is added to the mat as a solution of alkali metal silicate, ammonium silicate or a soluble silver salt other than silver nitrate.

FIG. 1.

FIG.2.

FIG.3.

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | NL-A-8700197 (ROCKWOOL LAPINUS)<br>* page 1, line 1 - page 2, line 37; claims 1-4 * | 1, 2 | A01G31/00 |
| Y | | 3-5 | |
| Y | US-A-3472644 (WOODSIDE)<br>* column 1, line 16 - column 2, line 66 * | 3 | |
| Y | PATENT ABSTRACTS OF JAPAN<br>vol. 005, no. 049 (C-00049) 08 April 1981,<br>& JP-A-54 079085 (OKAYAMA MAKOTO) 19 January 1981,<br>* the whole document * | 3 | |
| Y | EP-A-231691 (ISOVER SAINT-GOBAIN)<br>* page 4, line 27 - page 6, line 39 * | 5 | |
| Y | WORLD PATENTS ABSTRACTS<br>DERWENT PUBLICATIONS LTD.,London GB<br>No 83-703280<br>& JP-A-58091094 | 5 | |
| Y | PATENT ABSTRACTS OF JAPAN<br>vol. 005, no. 031 (C-00045) 25 February 1981,<br>& JP-A-54 062200 (SAKAI ISAO) 03 December 1980,<br>* the whole document * | 4 | TECHNICAL FIELDS SEARCHED (Int. Cl.5 )<br><br>A01G |
| P,A | PATENT ABSTRACTS OF JAPAN<br>vol. 013, no. 158 (C-00586) 17 April 1989,<br>& JP-A-62 154049 (IBIDEN CO LTD) 26 December 1988,<br>* the whole document * | 1, 2 | |
| A | EP-A-201426 (ISOVER SAINT-GOBAIN)<br>* column 15, line 13 - column 16, line 33 * | 1 | |
| A | EP-A-277397 (ROCK WOOL)<br>* page 3, lines 42 - 56; figure 1 * | 9 | |

The present search report has been drawn up for all claims

| Place of search | Date of completion of the search | Examiner |
|---|---|---|
| THE HAGUE | 13 NOVEMBER 1989 | HERYGERS J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)